# EUROPEAN PATENT SPECIFICATION

(11) **EP 2 973 176 B1**
(45) Date of publication and mention of the grant of the patent: **02.04.2025**
(21) Application number: 14762444.9
(22) Date of filing: 17.03.2014
(51) Int. Cl.: G06F 21/55, H04L 9/40, H04W 12/128

(54) **SYSTEM AND METHOD EMPLOYING STRUCTURED INTELLIGENCE TO VERIFY AND CONTAIN THREATS AT ENDPOINTS**
SYSTEM UND VERFAHREN MIT STRUKTURIERTER INTELLIGENZ ZUR ÜBERPRÜFUNG UND BEKÄMPFUNG VON BEDROHUNGEN AN ENDPUNKTEN
SYSTÈME ET PROCÉDÉ UTILISANT UNE INTELLIGENCE STRUCTURÉE POUR CONTRÔLER ET GÉRER DES MENACES AU NIVEAU DE POSTES DE TRAVAIL

(30) Priority: 15.03.2013 US 201361800796 P
(43) Date of publication of application: 20.01.2016
(73) Proprietor: Mandiant, LLC, Milpitas, California 95035 (US)
(72) Inventor: CUNNINGHAM, Sean, Washington, District of Columbia 20036 (US); DANA, Robert, Springfield, Virginia 22153 (US); NARDONE, Joseph, Arlington, Virginia 22205 (US); FABER, Joseph, Round Hill, Virginia 20141 (US); ARUNSKI, Kevin, Sterling, Virginia 20165 (US)
(74) Representative: Swindell & Pearson Limited
(86) International application number: PCT/US2014/030633
(87) International publication number: WO 2014/145805

(56) References cited:
- JP-A- 2011 053 893
- KR-B1- 101 132 197
- US-A1- 2009 165 135
- US-A1- 2010 077 481
- US-A1- 2011 173 699
- US-A1- 2012 185 936
- US-A1- 2012 233 696
- US-A1- 2012 278 890
- KHALED SALAH ET AL: "Using Cloud Computing to Implement a Security Overlay Network", SECURITY & PRIVACY, IEEE, IEEE SERVICE CENTER, LOS ALAMITOS, CA, US, vol. 11, no. 1, 1 January 2013 (2013-01-01), pages 44 - 53, XP011492898, ISSN: 1540-7993, DOI: 10.1109/MSP.2012.88
- JON OBERHEIDE ET AL: "CloudAV: N-Version Antivirus in the Network Cloud", USENIX,, 15 July 2008 (2008-07-15), pages 1 - 16, XP061009236
- VLADIMIR GETOV: "Security as a Service in Smart Clouds -- Opportunities and Concerns", COMPUTER SOFTWARE AND APPLICATIONS CONFERENCE (COMPSAC), 2012 IEEE 36TH ANNUAL, IEEE, 16 July 2012 (2012-07-16), pages 373 - 379, XP032472770, ISBN: 978-1-4673-1990-4, DOI: 10.1109/COMPSAC.2012.112
- JON OBERHEIDE ET AL: "Rethinking Antivirus: Executable Analysis in the Network Cloud", USENIX, USENIX, THE ADVANCED COMPUTING SYSTEMS ASSOCIATION, 6 August 2007 (2007-08-06), pages 1 - 5, XP061009002

## Description

### BACKGROUND

### 1. Field

The present inventive concept relates to a system and method to detect and contain threatening executable code. More specifically, an embodiment of the present inventive concept relates to a system and method operable to improve identification and containment of threatening software across a plurality of endpoints.

### 2. Discussion of Related Art

Systems currently exist to detect executable code as it passes over a network. These systems employ a variety of methods of detection, including analyzing traffic at various protocol and application layers as well as analyzing common application artifacts such as email messages. These systems can analyze executable code using a variety of methods to extract information about the code's behavior. Existing systems use the extracted information to classify the code as benign or a potential threat.

While such existing systems may be effective at identifying threats represented by executable code in network traffic, they are not suitable to identify devices or users that may have been exposed to the threat. For example, existing systems and methods cannot conclusively determine if a threat or piece of code has reached a device on which it could be executed or, once such a threat or piece of code has reached such a device, whether or not it has actually executed.

Further, analysis of information and data traffic and application artifacts, and generation of information therefrom, takes time. During the process of analysis, there is a risk that a threatening piece of code may be transmitted to, received by, and potentially executed on a device. Even if a security investigator using existing systems can successfully determine that a threat has landed or executed, intervention against the threat using existing systems and methods must be performed manually or by channels outside the normal network, sometimes requiring physical access to the device, thus further extending the time between initiating analysis and effectively reacting to discovery of a threat. During the time it takes to implement existing systems and methods to detect, control or contain threatening software, such threatening software may be allowed to further its malicious functions.

Thus, there is a need for a system and method that provides improved detection, verification, tracking and reaction to threatening software.

US 2012/0233696 A1 discloses a method and a system of antivirus solution by using a SIM card combined with cloud antivirus server. The method comprises sending a signature data file from a mobile device to a cloud server. The cloud server receives the signature data file and checks the received signature data file by using a cloud virus database stored at the cloud server. The cloud server sends the checking result back to a SIM card of the mobile device via OTA (Over-The-Air).

US 2011/0173699 A1 discloses a network security system employing multiple levels of processing to identify security threats. Multiple host machines may each contain an agent that detects possibilities of security threats based on raw data sensed locally at that host. The hosts may share information obtained from local analysis and each host may use information generated at one or more other hosts, in combination with information generated locally, to identify a security concern, indicating with greater certainty that a security threat exists. Based on security concerns generated by multiple hosts, a security threat may be indicated and protective action may be taken.

US 2010/0077481 A1 discloses a malware analysis system that provides information about malware execution history on a client computer and allows automated back-end analysis for faster creation of identification signatures and removal instructions. The malware analysis system collects threat information on client computers and sends the threat information to a back-end analysis component for automated analysis. The back-end analysis component analyses the threat information by comparing the threat information to information about known threats. The system builds a signature for identifying the threat family and a mitigation script for neutralising the threat. The system sends the signature and mitigation data to client computers, which use the information to mitigate the threat. Thus, the malware analysis system detects and mitigates threats more quickly than previous systems by reducing the burden on technicians to manually create environments for reproducing the threats and manually analyse the threat behaviour.

Khaled Salah et al: "Using Cloud Computing to Implement a Security Overlay Network", SECURITY & PRIVACY, IEEE, IEEE SERVICE CENTER, LOS ALAMITOS, CA, US, vol. 11, no. 1, 1 January 2013, pages 44 to 53, XP011492898, ISSN: 1540-7993, DOI: 10.1109/MSP.2012.88 discloses a cloud-based security overlay network that seeks to provide services such as intrusion detection, antivirus and antispam, and distributed denial of service prevention.

Jon Oberheide et al: "CloudAV: N-Version Antivirus in the Network Cloud", USENIX, 15 July 2008, pages 1 to 16, XP061009236 advocates a model for malware detection on end hosts based on providing antivirus as an in-cloud network service. This model enables identification of malicious and unwanted software by multiple, heterogeneous detection engines in parallel (a technique termed "N-Version protection"). An in-cloud antivirus system (called "CloudAV") is disclosed that includes a lightweight, cross-platform host agent and a network service with ten antivirus engines and two behavioural detection engines. Document XP032472770 discloses security as a service, in the cloud and antivirus in the cloud. Document XP061009002 discloses executable analysis in the network cloud.

### SUMMARY

The invention is defined by the appended claims. Embodiments of the present inventive concept described herein remedy the aforementioned problems by providing a unique system and method operable to detect and contain threatening executable code.

Embodiments of the present inventive concept include software installed at an "endpoint", that is, at a device, such as a computer or mobile device, including a processor that is configured to communicate with a network, that is to be monitored and/or audited according to embodiments of the present inventive concept. Endpoints may illustratively include, e.g., client/server desktop computers, laptop/notebook computers, process controllers, medical devices, data acquisition devices, mobile devices such as smartphones and tablet computers, intermediate network devices and nodes such as network servers, and/or any other intelligent electronic device having network connectivity that may be configured to implement an endpoint agent. The endpoint agent(s) allow gathering of data and information relating to a network and its contents and components by utilizing audit modules to examine endpoints for evidence they have been exposed to a given threat, and to determine whether that threat (most commonly, executable code) has executed or otherwise been realized.

An endpoint agent may be installed locally at an endpoint or elsewhere so long as it is capable of accessing system information and memory of, and of auditing, the endpoint to which it is assigned. Utilizing software configured to monitor, and that is preferably installed on, endpoints means being present and persistent for extended timeframes and providing consistent and persistent monitoring and analysis. This allows embodiments of the system of the present inventive concept to record historical information about system state at endpoints, especially information relevant to common threat mechanisms, such that the information may be used to detect threats after they have landed, executed, and even taken action to hide their presence.

The endpoint agent(s) may then communicate information back to the original detecting and coordinating parts of the system as well as to any other appropriately-configured security software or platforms. The endpoint agent thus may enable a user, or an automated component of the system in certain embodiments, to take action against a threat on the endpoint(s), including by using the endpoint agent(s) to contain the threat. This containment strategy is unique, including because it is in response to a threat verified using present and historical data, and retains the ability to contact, monitor, remediate and ultimately lift containment on the affected endpoint while limiting the threat's ability to communicate.

The system and method of the present inventive concept are a departure from and an improvement over conventional systems in that, among other things, the system and method of the present inventive concept allows an investigator to determine whether a threat has persisted or executed. It allows that information to be communicated back to the detection mechanism (or other system) such that a user (or machine) may make a decision to take further action such as to contain the threat quickly and/or permit the system to do so automatically. All of this may take place in a matter of seconds, minutes, or hours.

These and other goals of the present inventive concept may be achieved by providing a method to identify potentially malicious code at an endpoint, e.g., a first endpoint among one or more endpoints, in a network. The method may include the step of using a threat monitor to monitor network data and extract a set of network data therefrom that includes "threat intelligence" or just "intelligence," which is any information exchanged or residing within the system network that may have strategic importance for detecting, tracking or analyzing a present or past threat. The threat monitor may employ a network monitor more specifically to monitor the network. That set of network data commonly includes executable code, and is processed to generate a report, which may be in the form of structured data and information. The set of network data may be processed using an analyzer of the threat monitor, for example a static or a dynamic analyzer.

A verifier including an agent coordinator may receive the report, and based thereon issue (i) instructions and/or (ii) indicators to an endpoint agent. Instructions may tell an agent to perform or not to perform certain actions and may comprise executable code or other instructions in a format that may be acted on by the endpoint agent. Indicators are pieces of information, such as logical "if-then" tests, data ranges, and other types of information, that may be used for comparison with information that resides on or is accessible to the endpoint or for configuring an audit to be performed on the endpoint. The endpoint agent may then process the (i) instructions and/or (ii) indicators to generate verification information.

In a preferred embodiment, the endpoint agent process may include one or more additional steps, after it takes in or receives instructions and/or indicators. The instructions and indicators may first pass to an audit controller that may control and configure tasking for an audit module of the endpoint agent. The audit module may retrieve, consolidate, and/or index information residing on or retrievable by the endpoint. It may do so intermittently or continuously pursuant to pre-programmed instructions automatically executed within the system and/or as prompted by additional requests from the audit controller, such as in response to a set of instructions and/or indicators from the verifier. The audit module may also form part of a persistent monitor, which also includes a buffered storage module for controlling storage of audit data created by an audit module.

Once the audit controller has provided instructions and/or indicators to the audit module, the audit module may perform an inspection of data and information residing on or accessible to the endpoint, and may further inspect its own records and audit data stored by the endpoint agent, and create resulting audit data. The audit data may then be passed to the buffered storage module for storage under conditions that may be pre-determined or that may vary with instructions provided by other components of the system or based on computer learning and/or system variances and needs. The audit data may then pass to an indicator matcher, which may or may not have been configured by the audit controller for example based on the instructions and/or indicators which prompted the audit being evaluated, and the indicator matcher may then process the audit data, including any hit candidates, to create recommendations to the audit controller on certain audit data that should be packaged up for transmission as verification information to be exported from the endpoint agent. In simpler embodiments, the audit data itself may be directly passed out of the endpoint agent as the verification information.

Still further, the verification information may be passed from the endpoint agent to the verifier, and processed by the verifier to determine whether the verification information indicates a verified threat. In performing this processing, the verification information may be compared against one or both of data obtained from another endpoint and data obtained from a security information and event management module (SIEM). The verification information, and possibly information regarding whether it represents a verified threat, may also be passed to the SIEM and/or the threat monitor. The method may further include changing the configuration and/or settings of the threat monitor based on the verification information.

Yet still further, the method may include steps for performing a containment action based on the verification information. A "containment action" is an action, for example changing or providing instructions to change endpoint system permissions, settings, communication patterns, execution priorities, memory allocations and similar properties, and is intended to effect the operation or disposition of potentially malicious software and/or information or data related to the potentially malicious software. In a preferred embodiment, after the verifier processes verification information and determines that there is verified threat information from the endpoint, the agent controller of the verifier configures a containment package including instructions for containment actions to be taken and/or executable code for an additional module which may be installed as part of the endpoint agent and which may undertake certain containment actions (a "containment agent").

Additional aspects, advantages, and utilities of the present inventive concept will be set forth in part in the description which follows and, in part, will be obvious from the description, or may be learned by practice of embodiments of the present inventive concept.

The foregoing is intended to be illustrative and is not meant in a limiting sense. Many features and subcombinations of the present inventive concept may be made and will be readily evident upon a study of the following specification and accompanying drawings comprising a part thereof. These features and subcombinations may be employed without reference to other features and subcombinations.

### BRIEF DESCRIPTION OF THE DRAWINGS

Embodiments of the present inventive concept are described in detail below with reference to the attached drawing figures, wherein:
FIG. 1 is a flowchart, partially in block diagram form, illustrating an example of a system or process of the present inventive concept to identify potentially malicious software at an endpoint;
FIG. 2 is a flowchart, partially in block diagram form, illustrating an example of a system or process of the present inventive concept to identify potentially malicious software at an endpoint;
FIG. 3 is a flowchart, partially in block diagram form, illustrating an example of a system or process of the present inventive concept to perform auditing on an endpoint and produce verification information; and
FIG. 4 is a flowchart, partially in block diagram form, illustrating an example of a system or process of the present inventive concept to perform a containment action.

The drawing figures do not limit the present inventive concept to the specific examples disclosed and described herein. The drawings are not to scale, emphasis instead being placed upon clearly illustrating embodiments of the principles of the present inventive concept.

### DETAILED DESCRIPTION

The following detailed description references the accompanying drawings that illustrate the present inventive concept. The illustrations and description are intended to describe aspects of the present inventive concept in sufficient detail to enable those skilled in the art to practice the present inventive concept. Other components can be utilized and changes can be made without departing from the scope of the present inventive concept. The following detailed description is, therefore, not to be taken in a limiting sense. The scope of the present inventive concept is defined only by the appended claims, along with the full scope of equivalents to which such claims are entitled.

In this description, references to "one embodiment," "an embodiment," or "embodiments" mean that the feature or features being referred to are included in at least one embodiment of the present inventive concept. Separate references to "one embodiment," "an embodiment," or "embodiments" in this description do not always refer to the same embodiment and are also not mutually exclusive unless so stated and/or except as will be readily apparent to those skilled in the art from the description. For example, a feature, structure, act, etc. described in one embodiment may also be included in other embodiments, but may not be included in all embodiments. Thus, the present inventive concept can include a variety of combinations and/or integrations of the embodiments described herein.

An embodiment of the present inventive concept provides a system and method that improves verification, information gathering regarding, and containment of threatening or potentially threatening executable code. Executable code is not limited to native binaries but may also include documents such as Portable Document Format (PDF) or common productivity documents such as those created with software sold under the trademarks EXCEL^{®} and WORD^{™}, or any artifact that may be itself executed, interpreted or otherwise processed, or that may contain code which it may cause to be executed or interpreted. Executable code may be extracted according to an embodiment of the present inventive concept at any level or by content-aware inspection of any application protocol and may use cues provided by other network traffic (such as requests to update existing components), or application-specific information (such as email headers or persistent HTTP session information). A software "module" as used herein shall refer to all or a part of a software program employed to perform a function described herein, and is not intended to imply that such code is or is not capable of independent and/or isolated functioning apart from other code nor that such code was or was not developed independently or in conjunction with other software code, nor that such code physically resides and/or is executed together with or apart from other code.

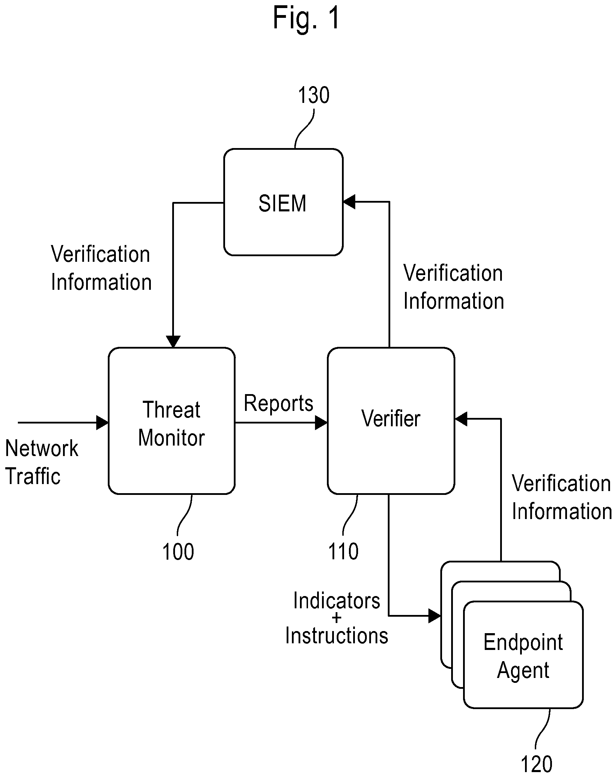

FIG. 1 illustrates an overview of a system of an embodiment of the present inventive concept with its primary subsystems. The system includes a threat monitor 100 that detects threats such as those represented by executable code, typically by analyzing traffic on a computer network and performing analysis to determine if that traffic contains executable code that may represent a threat. Network "traffic" may include any data transmitted over a network. Network traffic may include text, software, images, audio, or other digital data. Examples of network traffic include e-mail messages, instant messages, web content, or any network data that may be transmitted using a Hypertext Transfer Protocol, Hypertext Markup Language protocol, or may be transmitted in a manner suitable for display on a Web browser software application. The threat monitor 100 may copy any portion of the traffic, for example, any number of data packets from the network traffic, and may also capture metadata from the traffic. When a characteristic of the network traffic, such as a sequence of code, is identified that meets certain conditions such as those derived from intelligence known or accessible to the threat monitor 100, the threat monitor 100 may identify such a portion of the network traffic as a possible threat.

The threat monitor 100 further transmits reports for consumption, interpretation and analysis by a verifier 110. Preferably the reports are in a structured form based on a pre-determined format that may be updated from time to time using updates introduced into the system externally or based on computer learning and/or adaptations to network traffic or verification information collected by the system over time. The verifier 110 verifies reports provided by the threat monitor. It does so in part by supplying endpoint agents 120 installed at, or at least operable to access the memory or operating system of, endpoints (as described in more detail below) with threat indicators and instructions. Each endpoint may be referred to as a "node," and the endpoint agents 120 enable the evaluation of such indicators and execution of such instructions, relying on information regarding historical system state and information gathered in response to such indicators and instructions to determine if a threat is present and, potentially, whether the threat (often, executable code) has executed or otherwise been realized. The endpoint agents 120 are further operable to communicate threat verification information (including, for example audit data and hit data, and other contextual data and perhaps the indicators and instructions themselves as well) collected and/or generated in connection with the instructions and indicators back to the verifier 110.

"Indicators" include information or functions, such as logical test instructions, which if compared against audit data or relied on to configure or conduct an audit may indicate that an endpoint or other component of a system may be compromised. Examples of indicators include descriptions of files with a specific hash sum or database entries which match a particular regular expression (example: "a file exists named 'evil.exe' that was created after 3 p.m. yesterday"). Indicators may relate to any specific type or subset of information regarding system state (including but not limited to: contents of memory, contents of storage, names of files, contents of files including both byte content and the result of any analysis such as hash sums calculated from those bytes, and contents of operating system abstractions such as a system registry). Indicators and instructions, such as logical test instructions, may be stored and transmitted in an interchange format such as XML or JSON, and may describe logical operations and predicates which may be evaluated automatically by an appropriately configured software program. A common format for such an indicator is OpenlOC, but this is not the only format capable of use in accordance with the present inventive concept.

The system of FIG. 1 may include a security information and event manager or SIEM 130 configured to consume information such as, but not limited to, verification information or other information related to one or more endpoints, and correlate the information so that a user or machine may take action based on the information. The SIEM 130 may be embodied in software, hardware, or a combination thereof. The SIEM 130 may be configured to perform one or more security management functions such as, but not limited to, gathering and/or aggregating security-related information from one or more sources. In this manner, the SIEM 130 provides improved analysis and/or control of the information. The SIEM 130 of the present inventive concept is not limited to management of security information and/or events. Indeed, it is foreseen that the SIEM 130 may include additional functionality, e.g., functionality related to identifying, processing, and/or managing security related information and/or events. It is also foreseen that one or more functions of the SIEM 130 may be handled by one or more modules other than the SIEM 130, for instance, by an appropriately-configured verifier 110 if the SIEM 130 is unavailable. It is also foreseen that the present inventive concept may include one or more modules in lieu of or in addition to the SIEM 130. For instance, a security information management (SIM) module, a security event management (SEM) module, and/or the like may be used in lieu of or in addition to the SIEM 130.

The SIEM 130 according to embodiments of the present inventive concept may optionally convey threat verification information back to the threat monitor 100. The SIEM 130 may correlate verification information with intelligence gathered from many sources, including prior intelligence gathered from the endpoint agent 120, intelligence gathered from other endpoint(s), and/or with definitions or against rules or tests stored in memory accessible to the SIEM and optionally updated from time to time via a communication network.

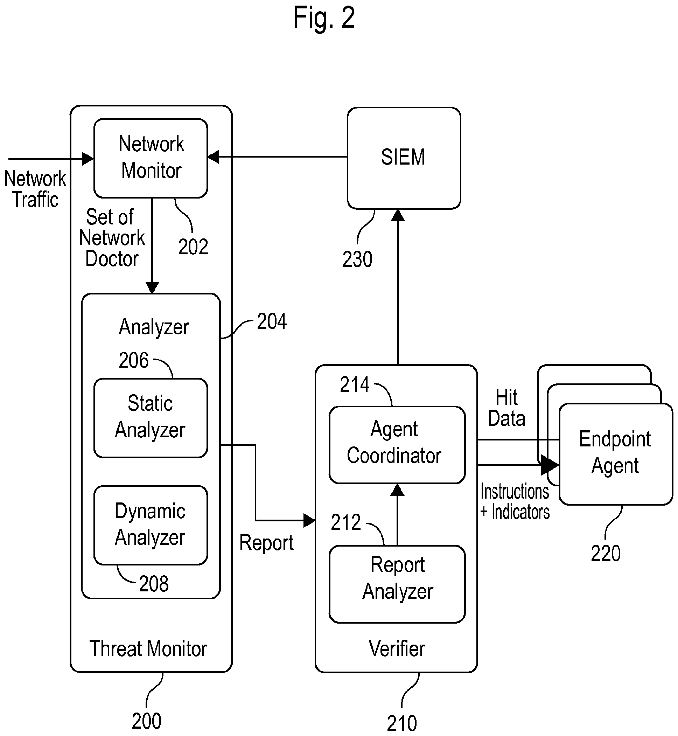

Turning now to FIG. 2, the verifier 210 of an embodiment of the present inventive concept is illustrated in additional detail along with a breakout of components of the threat monitor 200. A threat monitor 200 typically consists of components such as a network monitor 202 and one or more analyzers 204. Those components are illustrated separately in FIG. 2 because they may not always be implemented together in the same subsystem or component. However, they may be integrated in certain embodiments. A network monitor 202 monitors network traffic to identify and extract data such as executable code from the network, typically as it travels across the network. A grouping of such network data may be referred to herein as a "set." Any means to identify and extract executable code may be used in addition to raw network monitoring. The network monitor 202 sends the executable code it captures to an analyzer 204 for analysis.

The analyzer 204 gathers information about the set of network data through a variety of methods. For example, the analyzer 204 may employ a static analyzer 206 to gather information about executable code without executing it (such as by measuring its size and calculating a hash from the bytes of which it is comprised). The static analyzer 206 then adds information resulting from its analysis to a report. The analyzer 204 may further or alternatively employ or comprise a dynamic analyzer 208 to completely or partially execute the executable code and monitor its behavior, such as in a sandboxed and/or instrumented environment. The dynamic analyzer 208 may then add information resulting from its analysis to a report. A report's information may include what changes executing code attempts to make or makes to the environment where it executes, operations executing code attempts which may not change the environment, such as network connections or DNS lookups, and any other operations or behaviors of executing code that are detectable in the environment. The analyzer 204 packages the reports from its analysis mechanisms, such as the two discussed hereinabove, and uses configuration and other information (such as historical or human intelligence) to attach a designation of the type and degree of threat to a computer or user's security posed by items or network data referenced in the report.

Reports are transmitted to the verifier 210 which may consist of one or more components of software executing on one or more platforms and/or devices. The reports are communicated to a report analyzer 212 of the verifier 210. The report analyzer 212 may accept those reports via a network connection so they may be acted upon in a timely manner after detection and/or analysis. The report analyzer 212 analyzes a report and yields intelligence, including indicators and instructions (as well as associations between those indicators and the respective items in the report(s) giving rise to them, and information added to the instructions and/or indicators that specifies one or more hosts or sets of hosts or endpoints which should specifically be contacted to verify a described threat) and communicates these to an agent coordinator 214 of the verifier 210. The report analyzer 212 may apply selection methodologies based on configuration or other analysis results to refine reports into, or select indicators and instructions that, represent a higher-fidelity representation (high-fidelity indicators) of the threat than would otherwise have been apparent from analysis of all characteristics described in the report. These may provide stronger evidence that a given threat has been received by a device or user such as an endpoint (i.e., the threat "persisted") and further help determine whether the executable code associated with the threat has been executed or "detonated" on the device.

The agent coordinator 214 interprets the intelligence, including any indicators or instructions, performs any further configuring or selection/generation of indicators and instructions that may be needed before further transmission, selects an endpoint agent(s) 220 to perform processing of the instructions and indicators, then communicates that processing work to such endpoint agent(s) 220. For example, the work for endpoint agent 220 to perform may consist of indicators and instructions on how to test those indicators, including specific configurations for individual methods to acquire relevant endpoint system state information. The agent coordinator 214 may include a system of one or more devices running one or more pieces of software that can track, enroll, uniquely identify, and communicate with endpoint agents 220, as well as assign work and configuration to be executed by specific endpoint agents 220 and retrieve the result of that work. Communications with endpoint agents 220 may occur directly or indirectly, via cryptographically and secure intermediate locations. Results of work or other threat-related information received from endpoint agents 220, or "verification information," are received as payloads that may be of an arbitrary size, and such data may be stored and forwarded in order to successfully reach an endpoint agent 220 or a component of the agent coordinator 214. If such data is stored, the data may be stored in such a way that an intermediary would not immediately be able to inspect the transmitted data, such as using a cryptographically-sound PKI method.

An endpoint agent 220 tests endpoint system state and examines memory, including by performing audits thereof and/or accessing historical information about the system or endpoint, for example to determine if an indicator it receives is satisfied. The endpoint agent 220 is installed on, or at least operable to access the memory or operating system of, one or more endpoint devices or nodes and is configured with a means to request processing work from a configured agent manager and/or agent coordinator 214, to process the work (i.e., the instructions and indicators), and provide the result of work, including verification information, when the work is in progress and/or is complete.

The endpoint agent 220 audits one or more nodes or endpoints on the network, particularly looking for specific instances of any number of "high-fidelity indicators" in current or recorded system state and memory. It may receive work from the agent coordinator 214 in the form of indicators and instructions via a cryptographically secure channel and mechanism which may entail polling, contacting intermediate devices or any other means. The various components of the endpoint agent 220 may employ one or more methods to continuously sample and record system state information so that the system is capable of "looking back in time", so to speak, for example to determine if any part of the endpoint's system state matches an indicator and also whether some previous system state matched an indicator and at what point in time it did so. Preferably, the endpoint agent 220 and its components will operate, and more specifically will perform monitoring and recording functions, in a manner that is unlikely to cause immediate loss of forensic viability of the system, such as by pre-allocating storage such that data written to disk does not overwrite disk sectors which may contain information relevant to an investigation. The workflow should be controlled to prevent unintentional operation of features or components which may negatively affect the endpoint.

The endpoint agent 220 may still further receive work in the form of instructions to update itself and/or extend its functionality by installing or uninstalling components or other software, for example instructions to install additional software on the endpoint which can make changes to system state or behavior such that malicious software may continue to operate but may not affect the endpoint and surrounding systems.

This endpoint agent 220 may be configured so that it can post the results of completed work back, including verification information, such that the agent coordinator 214 can retrieve it and utilize it. The result of an endpoint agent's 214 completed work may include hit data including information from indicators and the results of processing same, audit methods, original intelligence sources, audit data, audit results and ambient system state. The endpoint agent 220 may be configured to report back the result of the work via a cryptographically secure channel (as above, which may entail multiple devices or connectivity mechanisms), including data regarding hits or "hit data". "Hit data" is information that at least partially satisfies an indicator and/or is returned as a result of executing an instruction, i.e., that creates a "hit," and may include any number of the following: the indicator which hit on the system state or memory, a partial or complete sample of the relevant system state or memory, a time stamp associated with the sample that generated a hit, ambient data not directly associated with the indicator but that helps to identify the system or provide data not directly requested but which is available to the mechanism (for example, the host name, logged-in users, or the current contents of a DNS cache).

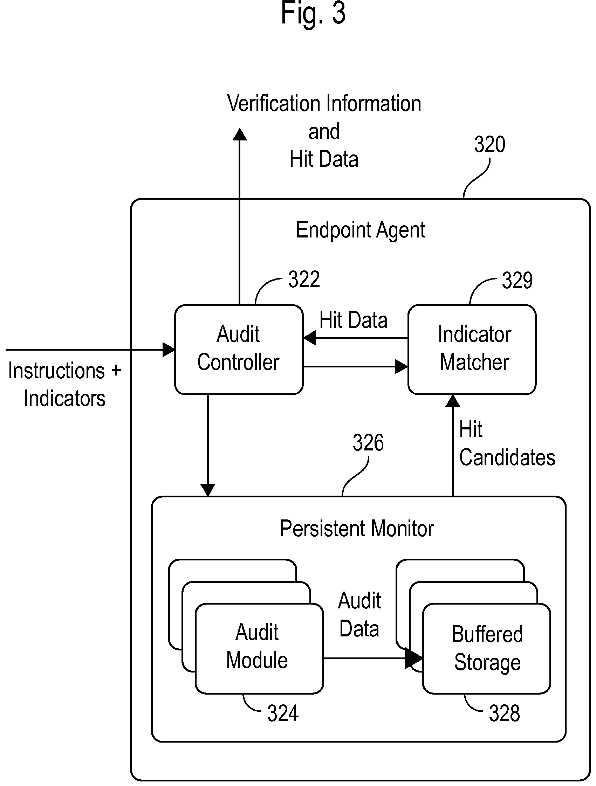

FIG. 3 illustrates the endpoint agent 320 in greater detail. Indicators and instructions are communicated to the endpoint agent 320 via a cryptographically secure mechanism. A component of the endpoint agent 320 is an audit controller 322, which receives such indicators and instructions. The audit controller 322 preferably controls audits of system state and memory performed by an audit module 324. In certain embodiments, the audit module 324 forms part of a persistent monitor 326 along with a buffered storage module 328, discussed in more detail below. The audit controller 322 interprets and/or packages the instructions and indicators into suitable configuration and sends to the audit module 324 for performance. The audit controller 322 also preferably controls operation of the persistent monitor 326 more broadly, including by directing its standing operations which in preferred embodiments include continuously recording system state. The audit controller 322 also, in preferred embodiments, uses indicators to configure an indicator matcher 329 component which can perform instantaneous and historical matching on system state and memory using audit data and indicators.

The persistent monitor 326 of the endpoint agent 320 monitors the operating system file system state and memory of the endpoint in preferred embodiments. For example, it may be configured to detect "any file that is created", and, if one is created, to provide audit data about that operation to the indicator matcher 329 (audit data matching any criteria set, for example a criterion set by the audit controller 322, may also be persisted in the buffered storage module 328 for later, historical matching). The persistent monitor 326 may also be configured to automatically report, directly or by way of the verifier or other system components, certain system events as or after they occur at the endpoint(s) to other components of the system, for example to the threat monitor for incorporation into or interpretation as intelligence or to the verifier or audit controller 322 for further configuration of indicators that may be active at one or more endpoint agents 320. The endpoint agent 320 may also receive indicators and instructions that are used to refine the configuration of the persistent monitor 326 (and it, in turn, may modify operation of individual audit methods), including by limiting the criteria for recording information obtained from audits. For example, further to the example described immediately above, the criteria may be changed to "any file created at or below [a certain path]", which is a narrower set of events.

The buffered storage module 328 may be configured (manually, automatically, or using an adaptive algorithm) on a per module and/or per system state category basis (such as file system, network connections, DNS lookups, etc.) so that an endpoint system state that changes often (and thus generates more audit data) may be buffered, stored, tuned, and retained differently from states with different rates of change or size of payload.

As endpoint system state changes are detected and persisted, the persistent monitor 326 may communicate hit candidates to the indicator matcher component of the endpoint agent 320. As hit candidates information is matched against configured indicators by the indicator matcher 329, the indicator matcher 329 will communicate hit data to the audit controller 322 for packaging as completed work to be augmented with any relevant system state and data, additional context, sample data and/or time stamped snapshots of the data that matched the indicator. Hit data is then communicated back to the verifier as threat verification information for further analysis and dissemination.

Returning to FIG. 2, the verifier 210 retrieves verification information, including hit data and other intelligence from the endpoint agent 220 and performs further evaluation and correlation if required to determine if such information represents a verified threat. Verification by the verifier 210 may involve contacting and receiving information from other endpoint systems and even other networks, and the verifier may utilize the SIEM 230 to make such contacts and may otherwise communicate verification information to and through the SIEM 230. Verification information may contain a set of host or endpoint identification data, hit data, and other data that might aid a detector or other information system to correlate the endpoints' state and memory with the original threat. The SIEM 230, or similar system for performing such functions, may include syslog, using a format like CEF, or may be an HTTP receiver configured to accept a REST-style payload in a structured format like XML or JSON.

The SIEM 230 or other configured system may then present the verification information to a user or automatic correlation mechanism (such as any component of the threat monitor 200) or may perform further correlations itself, such as against data from other endpoint agent(s) and taking into account the indicators and instructions leading to the verification information, or against information obtained from other threat monitoring systems. The SIEM 230 may also forward the verification information as well as any other configured or received state information on to the original network monitor 202, such that it may correlate hit data and intelligence with its original detection of a threat or potential threat and present that verified threat to the user. The verifier 210 may further send a notification and location (such as a URL) at which a complete hit data set may be retrieved via an appropriately authorized and authenticated channel.

The correlations performed by the SIEM 230, verifier, and/or threat monitor may automatically trigger, for example via the controller discussed below, additional steps of the method of the present inventive concept to verify and/or contain threat(s). For example, the controller may receive the results of such correlations, analyze them to determine the threat level presented thereby, and initiate one or more of the following steps at the endpoint agent 220 and/or other endpoint agents communicatively coupled to the controller via the communication network: (1) further investigation to verify or gather additional information regarding the threat(s), and (2) containment actions regarding the threat(s). One or more of these steps may be performed based on a threshold evaluation that may take into account high-fidelity indicators such as the source of the verification information, the possible impact of execution of the threat(s) at one or more endpoint(s), the number of times the verification information has been detected at the endpoint agent 220, and the number of times the verification information has been reported from other endpoint agents. This weighted threshold analysis may take into account, and assign varying weight to, a number of different factors indicating the threat level and/or reliability of the verification information.

The verifier 210 may further enable a properly authorized user or machine to "contain" a threat, that is to take a containment action to restrict or alter endpoints or their software in a way that affects the threat or its operation, such as by limiting network communication. The verifier 210 may also present contained or otherwise threatened endpoints to a user or machine in a manner which allows users to take action including further investigation, remediation, and optionally release of containment agents.

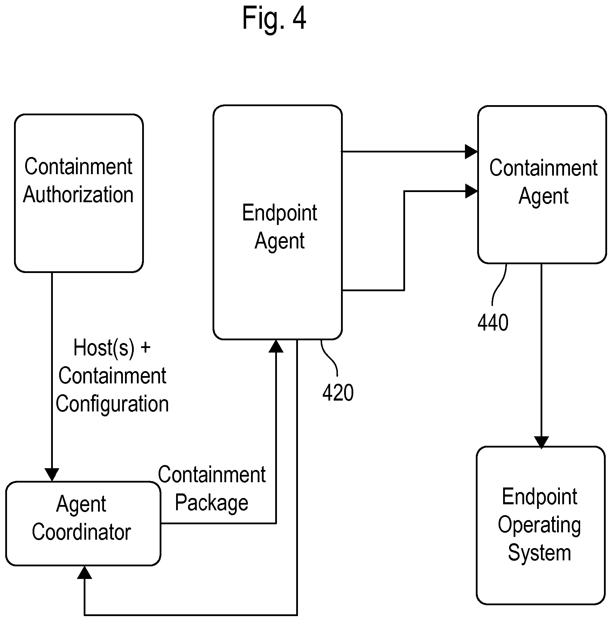

FIG. 4 illustrates a containment workflow through an embodiment of the system of the present inventive concept. Initially, endpoints having endpoint agents 420 are selected for containment, and authorization of that containment is given or confirmed. A set of hosts or endpoints and a containment configuration information are selected and communicated to an agent coordinator 414. The agent coordinator 414 selects or generates and configures an appropriate containment package, which may contain configuration information, may describe a means to download executable code, may itself contain executable code, or any combination of these. An endpoint agent 420 receives the containment package and performs the steps it describes or instructs, either performing the containment actions itself or ultimately resulting in additional executable code being made available to the endpoint agent 420. If additional executable code is contained or described in the containment package, the endpoint agent 420 installs that executable code, or the "containment agent" 440, on the local host such that it is configured to affect system configuration and state.

The endpoint agent 420 may also configure the containment agent 440 using configuration data extracted from the containment package or otherwise determined or obtained by endpoint agent 420. The containment agent 440 makes changes to the system state and/or configuration, for example so that a threat on that endpoint may be contained, and notifies the endpoint agent 420 when the containment actions and results thereof are complete. The containment agent 440 can be instructed via a cryptographically secure channel and mechanism to perform actions intended to affect the ability of malicious software to function, communicate, send or receive instructions, or affect the system in other ways that "contain" the endpoint threat. It can also perform the above without affecting the endpoint's ability to communicate with the system coordinating its actions. Finally, the containment agent 440 can be instructed in a similar manner to cease the "contain" operation or containment actions in whole or in part, up to and including uninstalling the containment agent 440 itself, or requiring that it be deployed via the mechanism described above in order to perform further containment operations. The endpoint agent 420 communicates containment status and other host context information back to the agent coordinator 414 such that it can communicate information about the containment operation to a user or machine for display or other action.

The previous description of various embodiments of the presently disclosed inventive concept is provided to enable any person skilled in the art to make or use the present inventive concept. Various modifications will be readily apparent to those skilled in the art, and the generic principles defined herein may be applied alternatively without departing from the scope of the present inventive concept. Thus, the present inventive concept is not intended to be limited to the description herein but is to be accorded the widest scope consistent with the principles and novel features disclosed herein.

The steps of a method, system, or operation described in connection with embodiments of the present inventive concept disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. Furthermore, the modules, agents, and other units described herein for performing steps of the present inventive concept may be executed by one processor, or by a plurality of processors housed within one computing device or a plurality of devices, communicatively coupled to a communication network. The processor(s) may represent one or more general-purpose processors such as a microprocessor, a central processing unit, or the like. More particularly, the processor may be a complex instruction set computing microprocessor, reduced instruction set computing microprocessor, very long instruction word microprocessor, or processor implementing other instruction sets or processors implementing a combination of instruction sets. The processor(s) may also be one or more special-purpose processors such as an application specific integrated circuit, a field programmable gate array, a digital signal processor, a network processor, a graphics processor, a network processor, a communications processor, a cryptographic processor, a co-processor, an embedded processor, or any other type of logic capable of processing instructions. The processor(s) is configured to execute instructions for performing the operations and steps discussed herein.

The modules, agents and other units described herein for performing steps of the present inventive concept may also be stored in and accessed from one or a plurality of memory locations for storing software program code (including application programs) and data structures associated with the embodiments described herein and that are addressable by the processor(s) and the communication network. The communication network may include a public computer network such as the Internet, in which case an optional firewall may be interposed between the communication network and one or more processors executing the modules, agents, and other units described herein, and/or between the communication network and the endpoints described herein. The communication network may alternatively be a private computer network such as a wireless telecommunication network, wide area network, or local area network, or a combination of networks.

Further, one or more of the modules, agents and other units described herein for performing steps of the present inventive concept may be stored and/or executed at the endpoint(s) of the present inventive concept. For example, the threat monitor may be stored on memory located at the endpoint(s), or be executed on a processor(s) at the endpoint(s), together with the endpoint agent(s) in one embodiment, without deviating from the scope of the present inventive concept. Such units are communicatively coupled to the endpoint(s) via the communication network. A further example is where one or more of the modules, agents and other units described herein for performing steps of the present inventive concept, such as the threat monitor and the verifier's agent coordinator, are contained within middleware communicatively coupled to the communication network.

One or more of the modules, agents and other units described herein for performing steps of the present inventive concept may be controlled by a controller (data processing circuitry) communicatively coupled to a storage device and configured to manage and/or control one or more of such units. The controller may further provide updates to such units' software programs, and may be incorporated into one or more, or into all, of them, depending on the deployment.

Having now described the features, discoveries and principles of the present inventive aspect of this disclosure, the manner in which the present inventive aspect is constructed and used, the characteristics of the construction, and advantageous, new and useful results obtained; the new and useful structures, devices, elements, arrangements, parts and combinations, are set forth in the appended claims.

It is also to be understood that the following claims are intended to cover all of the generic and specific features of the present inventive aspect herein described, and all statements of the scope of the present inventive aspect which, as a matter of language, might be said to fall there between.

## Claims

1. A computerized method for verifying one or more security threats arising from potentially malicious code executing at any of a plurality of endpoints in a private computer network, where the method includes generating a report by a threat monitor (100, 200) coupled to the private computer network and the report includes information resulting from the threat monitor (100, 200) capturing a portion of network data, extracting any executable code from the portion of the network data, and analyzing the extracted executable code to produce the information about the executable code representing a potential network threat:
receiving, by a report analyzer (212) implemented as part of a verifier (110, 210), the report;
analyzing, by the report analyzer (212) of the verifier (110, 210), the information within the report to yield intelligence that includes at least threat indicators and executable instructions directed to performing an audit for indicators matching the threat indicators to seek evidence whether the potentially malicious code has been executed on any of the plurality of endpoints;
selecting, by an agent coordinator (214) implemented as part of the verifier (110, 210), based on the intelligence, one or more endpoints of the plurality of endpoints each configured to conduct an audit of the executable code;
issuing, by the agent coordinator (214), at least a threat indicator of the threat indicators and at least an instruction of the executable instructions over a communication network to an endpoint agent (120, 220) of each endpoint of the selected one or more endpoints that is to:
(i) receive at least the instruction of the executable instructions and the threat indicator of the threat indicators,
(ii) conduct an audit, in accordance with at least the instruction of the executable instructions, of data in a memory of the endpoint for an indicator that matches at least one of the threat indicators,
(iii) obtain verification information comprising results of the audit conducted by the endpoint, and
(iv) transmit the verification information over the communication network to the verifier (110, 210);
gathering and correlating, at the verifier (110, 210), the verification information from each endpoint agent (120, 220) of the selected one or more endpoints to determine, based on the correlation, whether the executable code corresponds to malicious code and the verification information corresponds to a verified threat; and
sending a notification including a portion of the verification information to identify the verified threat and to identify each of the one or more endpoints evidencing the verified threat.

2. The computerized method according to claim 1, wherein the instruction of the executable instructions causes the one or more endpoints to perform, or not perform, a certain action including performing the audit, and wherein each of the threat indicators includes information to be used for comparison with information that resides on or is accessible to the one or more endpoints to gather the evidence that the one or more endpoints have been exposed to any of the one or more security threats.

3. The computerized method according to claim 1, wherein the audit includes an analysis of:
(i) the memory of the endpoint of the one or more endpoints by at least initiating execution of the associated instruction to examine content of the memory to identify if at least the received threat indicator matches data stored within the memory, and
(ii) system state information associated with the endpoint to determine if the at least the threat indicator matches any portion of the system state information.

4. The computerized method according to claim 3, wherein the system state information includes information regarding prior system state changes, and wherein the audit seeks to find an indicator in the information regarding the prior system state changes that matches the threat indicator.

5. The computerized method according to claims 1, 2 or 3, wherein the indicator matches at least one of the threat indicators when a correlation between the indicator and the at least one of the threat indicators is above a threshold.

6. The computerized method according to claim 1, wherein the threat indicator includes information, including logical "if-then" tests, data ranges, or other types of information, that is used for comparison with information that resides on or is accessible to the endpoint or for configuring the audit to be performed on the endpoint.

7. The computerized method according to claim 1, wherein the verification information is processed by the verifier by comparing the verification information to (a) data obtained from another endpoint different than the endpoint, or (b) data obtained from a security information and event manager module.

8. The computerized method according to claim 1, wherein conducting the audit comprises
configuring an indicator matcher within the endpoint agent to receive the indicators;
monitoring the system state of the endpoint and generating audit data in response to a monitored change of the system state; and
providing data, based on the audit data, to the indicator matcher to determine whether the endpoint is compromised based on a matching of data based on the audit data to any of the indicators.

9. A system for verifying one or more security threats arising from potentially malicious code executing at any of a plurality of endpoints in a network, wherein the system is communicatively coupled to a threat monitor (100, 200) operable to capture a portion of network data, extract any executable code from the portion of the network data, and analyze the extracted executable code to produce information about the executable code representing a potential network threat, the system comprising:
(1) a report analyzer (212) implemented as part of a verifier (110, 210) operable to:
(a) receive a report, and
(b) analyze the information within the report to yield intelligence that includes at least threat indicators and executable instructions directed to performing an audit for indicators matching the threat indicators to seek evidence whether the potentially malicious code has been executed on any of the plurality of endpoints; and
(2) an agent coordinator (214) implemented as part of the verifier (110, 210) operable to:
(a) select, based on the intelligence, one or more endpoints of the plurality of endpoints each configured to conduct an audit of the executable code;
(b) issue at least a threat indicator of the threat indicators and at least an instruction of the executable instructions over a communication network to an endpoint agent (120, 220) of each endpoint of the selected one or more endpoints that is to:
(i) receive at least the instruction of the executable instructions and the threat indicator of the threat indicators,
(ii) conduct an audit, in accordance with at least the instruction of the executable instructions, of data in a memory of the endpoint for an indicator that matches at least one of the threat indicators,
(iii) obtain verification information comprising results of the audit examination conducted by the endpoint (120, 220), and
(iv) transmit the verification information over the communication network to the verifier (110, 210);
(c) gather and correlate verification information received from the endpoint agent (120, 220) of the selected one or more endpoints to determine, based on the correlation, whether the executable code corresponds to malicious code and the verification information corresponds to a verified threat; and
(d) send a notification including a portion of the verification information to identify the verified threat and to identify each of the one or more endpoints evidencing the verified threat.

10. The system according to claim 9, wherein the instruction causes the one or more endpoints to perform, or not perform, a certain action including performing the audit, and wherein each of the threat indicators includes information to be used for comparison with information that resides on or is accessible to the one or more endpoints to gather the evidence that the one or more endpoints have been exposed to any of the one or more security threats.

11. The system according to claim 9, wherein the audit includes an analysis of:
(a) the memory of the endpoint of the one or more endpoints by at least initiating execution of the associated instruction to examine content of the memory to identify if at least the received threat indicator matches data stored within the memory, and
(b) system state information associated with the endpoint to determine if the at least the threat indicator matches any portion of the system state information.

12. The system according to claims 9, 10 or 11, wherein the indicator matches at least one of the threat indicators when a correlation between the indicator and the at least one of the threat indicators is above a threshold.

13. The system according to claim 9, wherein the system is communicatively coupled to a security information and event management module (SIEM), and wherein the SIEM is configured to correlate verification information with intelligence gathered from a plurality of sources that include the plurality of endpoints.

14. The system according to claim 9, wherein the verification information is processed by the verifier by comparing the verification information to:
(a) data obtained from another endpoint different than the endpoint, or
(b) data obtained from a security information and event manager module.

15. The system according to claim 9, wherein the agent coordinator (214) is configured to conduct the audit by at least:
configuring an indicator matcher of the associated endpoint to receive at least the threat indicator;
monitoring system state information of the endpoint and generate audit data in response to a monitored change of the system state information; and
providing data, based on the audit data, to the indicator matcher to determine whether the endpoint is compromised based on a matching of data based on the audit data to any of the indicators.

## Patentansprüche

1. Computergestütztes Verfahren zum Überprüfen einer oder mehrerer Sicherheitsbedrohungen, die sich aus potenziell schädlichem Code ergeben, der an einem von einer Vielzahl von Endpunkten in einem privaten Computernetzwerk ausgeführt wird, wobei das Verfahren das Generieren eines Berichts durch einen Bedrohungsmonitor (100, 200), der mit dem privaten Computernetzwerk gekoppelt ist, beinhaltet und der Bericht Informationen beinhaltet, die sich daraus ergeben, dass der Bedrohungsmonitor (100, 200) einen Teil von Netzwerkdaten erfasst, einen ausführbaren Code aus dem Teil der Netzwerkdaten extrahiert und den extrahierten ausführbaren Code analysiert, um die Informationen über den ausführbaren Code zu generieren, der eine potenzielle Netzwerkbedrohung darstellt:
Empfangen des Berichts durch einen Berichtsanalysator (212), der als Teil eines Verifizierers (110, 210) implementiert ist;
Analysieren, durch den Berichtsanalysator (212) des Verifizierers (110, 210), der Informationen innerhalb des Berichts, um Erkenntnisse zu liefern, die zumindest Bedrohungsindikatoren und ausführbare Anweisungen beinhalten, die dazu gerichtet sind, eine Prüfung für Indikatoren durchzuführen, die mit den Bedrohungsindikatoren übereinstimmen, um Belege zu suchen, ob der potenziell schädliche Code auf einem der Vielzahl von Endpunkten ausgeführt worden ist;
Auswählen, durch einen Agentenkoordinator (214), der als Teil des Verifizierers (110, 210) implementiert ist, basierend auf den Erkenntnissen, von einem oder mehreren Endpunkten der Vielzahl von Endpunkten, die jeweils dazu konfiguriert sind, eine Prüfung des ausführbaren Codes durchzuführen;
Ausgeben, durch den Agentenkoordinator (214), zumindest eines Bedrohungsindikators der Bedrohungsindikatoren und zumindest einer Anweisung der ausführbaren Anweisungen über ein Kommunikationsnetzwerk an einen Endpunktagenten (120, 220) jedes Endpunkts des ausgewählten einen oder der ausgewählten mehreren Endpunkte, der:
(i) zumindest die Anweisung der ausführbaren Anweisungen und den Bedrohungsindikator der Bedrohungsindikatoren empfangen soll,
(ii) eine Prüfung, gemäß zumindest der Anweisung der ausführbaren Anweisungen, von Daten in einem Speicher des Endpunkts für einen Indikator durchführen soll, der mit mindestens einem der Bedrohungsindikatoren übereinstimmt,
(iii) Verifizierungsinformationen erhalten soll, die Ergebnisse der vom Endpunkt durchgeführten Prüfung umfassen, und
(iv) die Verifizierungsinformationen über das Kommunikationsnetzwerk an den Verifizierer (110, 210) übertragen soll;
Sammeln und Korrelieren, am Verifizierer (110, 210), der Verifizierungsinformationen von jedem Endpunktagenten (120, 220) des ausgewählten einen oder der ausgewählten mehreren Endpunkte, um basierend auf der Korrelation zu bestimmen, ob der ausführbare Code schädlichem Code entspricht und die Verifizierungsinformationen einer verifizierten Bedrohung entsprechen; und
Senden einer Benachrichtigung, die einen Teil der Verifizierungsinformationen beinhaltet, um die verifizierte Bedrohung zu identifizieren und jeden des einen oder der mehreren Endpunkte zu identifizieren, die die verifizierte Bedrohung belegen.

2. Computergestütztes Verfahren nach Anspruch 1, wobei die Anweisung der ausführbaren Anweisungen bewirkt, dass der eine oder die mehreren Endpunkte eine bestimmte Aktion, die das Durchführen der Prüfung beinhaltet, durchführen oder nicht durchführen, und wobei jeder der Bedrohungsindikatoren Informationen beinhaltet, die zum Vergleichen mit Informationen verwendet werden sollen, die sich auf dem einen oder den mehreren Endpunkten befinden oder für diese zugänglich sind, um die Belege zu sammeln, dass der eine oder die mehreren Endpunkte einer der einen oder den mehreren Sicherheitsbedrohungen ausgesetzt worden sind.

3. Computergestütztes Verfahren nach Anspruch 1, wobei die Prüfung eine Analyse umfasst von:
(i) dem Speicher des Endpunkts des einen oder der mehreren Endpunkte, indem zumindest die Ausführung der zugehörigen Anweisung initiiert wird, um den Inhalt des Speichers zu untersuchen, um zu identifizieren, ob zumindest der empfangene Bedrohungsindikator mit Daten übereinstimmt, die im Speicher gespeichert sind, und
(ii) Systemzustandsinformationen, die dem Endpunkt zugeordnet sind, um zu bestimmen, ob der zumindest der Bedrohungsindikator mit einem Teil der Systemzustandsinformationen übereinstimmt.

4. Computergestütztes Verfahren nach Anspruch 3, wobei die Systemzustandsinformationen Informationen bezüglich früherer Systemzustandsänderungen beinhalten, und wobei die Prüfung anstrebt, einen Indikator in den Informationen bezüglich der früheren Systemzustandsänderungen zu finden, der mit dem Bedrohungsindikator übereinstimmt.

5. Computergestütztes Verfahren nach Anspruch 1, 2 oder 3, wobei der Indikator mit mindestens einem der Bedrohungsindikatoren übereinstimmt, wenn eine Korrelation zwischen dem Indikator und dem mindestens einen der Bedrohungsindikatoren über einem Schwellenwert liegt.

6. Computergestütztes Verfahren nach Anspruch 1, wobei der Bedrohungsindikator Informationen, einschließlich logischer "Wenn-dann"-Tests, Datenbereiche oder anderer Arten von Informationen, beinhaltet, die zum Vergleichen mit Informationen, die sich auf dem Endpunkt befinden oder für diesen zugänglich sind, oder zum Konfigurieren der an dem Endpunkt durchzuführenden Prüfung verwendet werden.

7. Computergestütztes Verfahren nach Anspruch 1, wobei die Verifizierungsinformationen durch den Verifizierer verarbeitet werden, indem die Verifizierungsinformationen mit (a) Daten, die von einem anderen Endpunkt als dem Endpunkt erhalten wurden, oder (b) Daten, die von einem Sicherheitsinformations- und Ereignisverwaltungsmodul erhalten wurden, verglichen werden.

8. Computergestütztes Verfahren nach Anspruch 1, wobei das Durchführen der Prüfung umfasst:
Konfigurieren eines Indikatorabgleichers innerhalb des Endpunktagenten, um die Indikatoren zu empfangen;
Überwachen des Systemzustands des Endpunkts und Generieren von Prüfungsdaten als Reaktion auf eine überwachte Änderung des Systemzustands; und
Bereitstellen von Daten, basierend auf den Prüfungsdaten, an den Indikatorabgleicher, um zu bestimmen, ob der Endpunkt kompromittiert ist, basierend auf einem Abgleich von Daten basierend auf den Prüfungsdaten mit einem der Indikatoren.

9. System zum Verifizieren einer oder mehrerer Sicherheitsbedrohungen, die sich aus potenziell schädlichem Code ergeben, der an einem einer Vielzahl von Endpunkten in einem Netzwerk ausgeführt wird, wobei das System kommunikativ mit einem Bedrohungsmonitor (100, 200) gekoppelt ist, der dazu betreibbar ist, einen Teil der Netzwerkdaten zu erfassen, einen ausführbaren Code aus dem Teil der Netzwerkdaten zu extrahieren und den extrahierten ausführbaren Code zu analysieren, um Informationen über den ausführbaren Code zu erzeugen, die eine potenzielle Netzwerkbedrohung darstellen, wobei das System umfasst:
(1) einen Berichtsanalysator (212), der als Teil eines Verifizierers (110, 210) implementiert ist, der betreibbar ist, um:
(a) einen Bericht zu empfangen und
(b) die Informationen innerhalb des Berichts zu analysieren, um Erkenntnisse zu liefern, die zumindest Bedrohungsindikatoren und ausführbare Anweisungen beinhalten, die dazu gerichtet sind, eine Prüfung für Indikatoren durchzuführen, die mit den Bedrohungsindikatoren übereinstimmen, um Belege zu suchen, ob der potenziell schädliche Code auf einem der Vielzahl von Endpunkten ausgeführt worden ist; und
(2) einen Agentenkoordinator (214), der als Teil des Verifizierers (110, 210) implementiert ist, der betreibbar ist, um:
(a) basierend auf den Erkenntnissen einen oder mehrere Endpunkte aus der Vielzahl von Endpunkten auszuwählen, die jeweils dazu konfiguriert sind, eine Prüfung des ausführbaren Codes durchzuführen;
(b) zumindest einen Bedrohungsindikator der Bedrohungsindikatoren und zumindest eine Anweisung der ausführbaren Anweisungen über ein Kommunikationsnetzwerk an einen Endpunktagenten (120, 220) jedes Endpunkts des ausgewählten einen oder der ausgewählten mehreren Endpunkte auszugeben, der:
(i) zumindest die Anweisung der ausführbaren Anweisungen und den Bedrohungsindikator der Bedrohungsindikatoren empfangen soll,
(ii) eine Prüfung, gemäß zumindest der Anweisung der ausführbaren Anweisungen, von Daten in einem Speicher des Endpunkts für einen Indikator durchführen soll, der mit mindestens einem der Bedrohungsindikatoren übereinstimmt,
(iii) Verifizierungsinformationen erhalten soll, die Ergebnisse der vom Endpunkt (120, 220) durchgeführten Prüfungsuntersuchung umfassen, und
(iv) die Verifizierungsinformationen über das Kommunikationsnetzwerk an den Verifizierer (110, 210) übertragen soll;
(c) Verifizierungsinformationen zu sammeln und zu korrelieren, die von dem Endpunktagenten (120, 220) des ausgewählten einen oder der ausgewählten mehreren Endpunkte empfangen wurden, um basierend auf der Korrelation zu bestimmen, ob der ausführbare Code schädlichem Code entspricht und die Verifizierungsinformationen einer verifizierten Bedrohung entsprechen; und
(d) eine Benachrichtigung, die einen Teil der Verifizierungsinformationen beinhaltet, zu senden um die verifizierte Bedrohung zu identifizieren und jeden des einen oder der mehreren Endpunkte zu identifizieren, die die verifizierte Bedrohung belegen.

10. System nach Anspruch 9, wobei die Anweisung bewirkt, dass der eine oder die mehreren Endpunkte eine bestimmte Aktion, die das Durchführen der Prüfung beinhaltet, durchführen oder nicht durchführen, und wobei jeder der Bedrohungsindikatoren Informationen beinhaltet, die zum Vergleichen mit Informationen verwendet werden sollen, die sich auf dem einen oder den mehreren Endpunkten befinden oder für diese zugänglich sind, um die Belege zu sammeln, dass der eine oder die mehreren Endpunkte einer der einen oder den mehreren Sicherheitsbedrohungen ausgesetzt worden sind.

11. System nach Anspruch 9, wobei die Prüfung eine Analyse beinhaltet von:
(a) dem Speicher des Endpunkts des einen oder der mehreren Endpunkte, indem zumindest die Ausführung der zugehörigen Anweisung initiiert wird, um den Inhalt des Speichers zu untersuchen, um zu identifizieren, ob zumindest der empfangene Bedrohungsindikator mit Daten übereinstimmt, die im Speicher gespeichert sind, und
(b) Systemzustandsinformationen, die dem Endpunkt zugeordnet sind, um zu bestimmen, ob der zumindest der Bedrohungsindikator mit einem Teil der Systemzustandsinformationen übereinstimmt.

12. System nach Anspruch 9, 10 oder 11, wobei der Indikator mit mindestens einem der Bedrohungsindikatoren übereinstimmt, wenn eine Korrelation zwischen dem Indikator und dem mindestens einen der Bedrohungsindikatoren über einem Schwellenwert liegt.

13. System nach Anspruch 9, wobei das System kommunikativ mit einem Sicherheitsinformations- und Ereignisverwaltungsmodul (SIEM) gekoppelt ist, und wobei das SIEM dazu konfiguriert ist, Verifizierungsinformationen mit Erkenntnissen zu korrelieren, die aus einer Vielzahl von Quellen gesammelt wurden, die die Vielzahl von Endpunkten beinhalten.

14. System nach Anspruch 9, wobei die Verifizierungsinformationen durch den Verifizierer verarbeitet werden, indem die Verifizierungsinformationen verglichen werden mit:
(a) Daten, die von einem anderen Endpunkt als dem Endpunkt erhalten wurden, oder
(b) Daten, die von einem Sicherheitsinformations- und Ereignisverwaltungsmodul erhalten wurden.

15. System nach Anspruch 9, wobei der Agentenkoordinator (214) dazu konfiguriert ist, die Prüfung durch mindestens Folgendem durchzuführen:
Konfigurieren eines Indikatorabgleichers des zugehörigen Endpunkts, um zumindest den Bedrohungsindikator zu empfangen;
Überwachen von Systemzustandsinformationen des Endpunkts und Generieren von Prüfungsdaten als Reaktion auf eine überwachte Änderung der Systemzustandsinformationen; und
Bereitstellen von Daten, basierend auf den Prüfungsdaten, an den Indikatorabgleicher, um zu bestimmen, ob der Endpunkt kompromittiert ist, basierend auf einem Abgleich von Daten basierend auf den Prüfungsdaten mit einem der Indikatoren.

## Revendications

1. Procédé informatisé pour contrôler une ou plusieurs menaces de sécurité découlant d'un code potentiellement malveillant s'exécutant au niveau de l'un quelconque d'une pluralité de postes de travail dans un réseau informatique privé, le procédé comprenant la génération d'un rapport par un moniteur de menace (100, 200) couplé au réseau informatique privé et le rapport comprenant des informations résultant du moniteur de menace (100, 200) capturant une partie des données de réseau, l'extraction d'un quelconque code exécutable de la partie des données de réseau, et l'analyse du code exécutable extrait pour produire les informations sur le code exécutable représentant une menace de réseau potentielle :
la réception, par un analyseur de rapport (212) mis en œuvre en tant que vérificateur (110, 210), du rapport ;
l'analyse, par l'analyseur de rapport (212) du vérificateur (110, 210), des informations contenues dans le rapport pour produire une intelligence qui comprend au moins des indicateurs de menace et des instructions exécutables visant à effectuer un audit pour des indicateurs correspondant aux indicateurs de menace afin de rechercher des preuves si le code potentiellement malveillant a été exécuté sur l'un quelconque de la pluralité de postes de travail ;
la sélection, par un coordinateur d'agent (214) mis en œuvre dans le cadre du vérificateur (110, 210), sur la base de l'intelligence, d'un ou de plusieurs postes de travail de la pluralité de postes de travail chacun configuré pour effectuer un audit du code exécutable ;
l'émission, par le coordinateur d'agent (214), d'au moins un indicateur de menace des indicateurs de menace et d'au moins une instruction des instructions exécutables sur un réseau de communication à un agent de poste de travail (120, 220) de chaque poste de travail de l'un ou plusieurs postes de travail sélectionnés qui doit :
(i) recevoir au moins l'instruction des instructions exécutables et l'indicateur de menace des indicateurs de menace,
(ii) effectuer un audit, conformément au moins à l'instruction des instructions exécutables, des données dans une mémoire du poste de travail pour un indicateur qui correspond à au moins l'un des indicateurs de menace,
(iii) obtenir des informations de vérification comprenant les résultats de l'audit effectué par le poste de travail, et
(iv) transmettre les informations de vérification sur le réseau de communication au vérificateur (110, 210) ;
la collecte et la corrélation, au niveau du vérificateur (110, 210), des informations de vérification provenant de chaque agent de poste de travail (120, 220) de l'un ou plusieurs postes de travail sélectionnés pour déterminer, en fonction de la corrélation, si le code exécutable correspond à un code malveillant et si les informations de vérification correspondent à une menace vérifiée ; et
l'envoi d'une notification comprenant une partie des informations de vérification pour identifier la menace vérifiée et pour identifier chacun de l'un ou plusieurs postes de travail donnant une preuve de la menace vérifiée.

2. Procédé informatisé selon la revendication 1, dans lequel l'instruction des instructions exécutables amène l'un ou plusieurs postes de travail à exécuter, ou à ne pas exécuter, une certaine action comprenant l'exécution de l'audit, et dans lequel chacun des indicateurs de menace comprend des informations à utiliser pour une comparaison avec des informations qui résident sur ou sont accessibles à l'un ou plusieurs postes de travail pour recueillir la preuve que l'un ou plusieurs postes de travail ont été exposés à l'un quelconque de l'une ou plusieurs menaces de sécurité.

3. Procédé informatisé selon la revendication 1, dans lequel l'audit comprend une analyse de :
(i) la mémoire du poste de travail de l'un ou plusieurs postes de travail en lançant au moins l'exécution de l'instruction associée pour examiner le contenu de la mémoire pour identifier si au moins l'indicateur de menace reçu correspond aux données stockées dans la mémoire, et
(ii) des informations d'état du système associées au poste de travail pour déterminer si l'au moins l'indicateur de menace correspond à une quelconque partie des informations d'état du système.

4. Procédé informatisé selon la revendication 3, dans lequel les informations d'état de système comprennent des informations concernant des changements d'état de système antérieurs, et dans lequel l'audit cherche à trouver un indicateur dans les informations concernant les changements d'état de système antérieurs qui correspond à l'indicateur de menace.

5. Procédé informatisé selon les revendications 1, 2 ou 3, dans lequel l'indicateur correspond à au moins l'un des indicateurs de menace lorsqu'une corrélation entre l'indicateur et l'au moins un des indicateurs de menace est supérieure à un seuil.

6. Procédé informatisé selon la revendication 1, dans lequel l'indicateur de menace comprend des informations, comprenant des tests logiques « si alors », des plages de données ou d'autres types d'informations, qui sont utilisées pour une comparaison avec des informations qui résident sur ou sont accessibles au poste de travail ou pour configurer l'audit à effectuer sur le poste de travail.

7. Procédé informatisé selon la revendication 1, dans lequel les informations de vérification sont traitées par le vérificateur en comparant les informations de vérification à (a) des données obtenues en provenance d'un autre poste de travail différent du poste de travail, ou (b) des données obtenues à partir d'un module de gestion d'informations et d'événements de sécurité.

8. Procédé informatisé selon la revendication 1, dans lequel la réalisation de l'audit comprend la configuration d'un adaptateur d'indicateurs contenu dans l'agent de poste de travail pour recevoir les indicateurs ;
la surveillance de l'état du système du poste de travail et la génération de données d'audit en réponse à un changement surveillé de l'état du système ; et
la fourniture de données, sur la base des données d'audit, à l'adaptateur d'indicateurs pour déterminer si le poste de travail est compromis sur la base d'une mise en correspondance de données sur la base des données d'audit avec l'un quelconque des indicateurs.

9. Système pour contrôler une ou plusieurs menaces de sécurité découlant d'un code potentiellement malveillant s'exécutant au niveau de l'un quelconque d'une pluralité de postes de travail dans un réseau, dans lequel le système est couplé de manière communicative à un moniteur de menace (100, 200) pouvant fonctionner pour capturer une partie des données de réseau, extraire un quelconque code exécutable de la partie des données de réseau, et analyser le code exécutable extrait pour produire des informations sur le code exécutable représentant une menace de réseau potentielle, le système comprenant :
(1) un analyseur de rapport (212) mis en œuvre dans le cadre d'un vérificateur (110, 210), utilisable pour:
(a) recevoir un rapport, et
(b) analyser les informations contenues dans le rapport pour produire une intelligence qui comprend au moins des indicateurs de menace et des instructions exécutables visant à effectuer un audit pour des indicateurs correspondant aux indicateurs de menace afin de rechercher des preuves si le code potentiellement malveillant a été exécuté sur l'un quelconque de la pluralité de postes de travail ; et
(2) un coordinateur d'agent (214) mis en œuvre dans le cadre du vérificateur (110, 210), utilisable pour:
(a) sélectionner, sur la base de l'intelligence, un ou plusieurs postes de travail de la pluralité de postes de travail chacun configuré pour effectuer un audit du code exécutable ;
(b) émettre au moins un indicateur de menace des indicateurs de menace et au moins une instruction des instructions exécutables sur un réseau de communication à un agent de poste de travail (120, 220) de chaque poste de travail de l'un ou plusieurs postes de travail sélectionnés qui doit :
(i) recevoir au moins l'instruction des instructions exécutables et l'indicateur de menace des indicateurs de menace,
(ii) effectuer un audit, conformément au moins à l'instruction des instructions exécutables, des données dans une mémoire du poste de travail pour un indicateur qui correspond à au moins l'un des indicateurs de menace,
(iii) obtenir des informations de vérification comprenant les résultats de l'examen d'audit effectué par le poste de travail (120, 220), et
(iv) transmettre les informations de vérification sur le réseau de communication au vérificateur (110, 210) ;
(c) recueillir et corréler les informations de vérification reçues de l'agent de poste de travail (120, 220) de l'un ou plusieurs postes de travail sélectionnés pour déterminer, en fonction de la corrélation, si le code exécutable correspond à un code malveillant et si les informations de vérification correspondent à une menace vérifiée ; et
(d) envoyer une notification comprenant une partie des informations de vérification pour identifier la menace vérifiée et pour identifier chacun de l'un ou plusieurs postes de travail donnant la preuve de la menace vérifiée.

10. Système selon la revendication 9, dans lequel l'instruction amène l'un ou plusieurs postes de travail à exécuter, ou à ne pas exécuter, une certaine action comprenant l'exécution de l'audit, et dans lequel chacun des indicateurs de menace comprend des informations à utiliser pour une comparaison avec des informations qui résident sur ou sont accessibles à l'un ou plusieurs postes de travail pour recueillir la preuve que l'un ou plusieurs postes de travail ont été exposés à l'un quelconque de l'une ou plusieurs menaces de sécurité.

11. Système selon la revendication 9, dans lequel l'audit comprend une analyse de :
(a) la mémoire du poste de travail de l'un ou plusieurs postes de travail en lançant au moins l'exécution de l'instruction associée pour examiner le contenu de la mémoire pour identifier si au moins l'indicateur de menace reçu correspond aux données stockées dans la mémoire, et
(b) des informations d'état du système associées au poste de travail pour déterminer si l'au moins l'indicateur de menace correspond à une quelconque partie des informations d'état du système.

12. Système selon les revendications 9, 10 ou 11, dans lequel l'indicateur correspond à au moins l'un des indicateurs de menace lorsqu'une corrélation entre l'indicateur et l'au moins un des indicateurs de menace est supérieure à un seuil.

13. Système selon la revendication 9, dans lequel le système est couplé de manière communicative à un module de gestion d'informations et d'événements de sécurité (SIEM), et dans lequel le SIEM est configuré pour corréler des informations de vérification avec une intelligence recueillie à partir d'une pluralité de sources qui comprennent la pluralité de postes de travail.

14. Système selon la revendication 9, dans lequel les informations de vérification sont traitées par le vérificateur en comparant les informations de vérification à :
(a) des données obtenues à partir d'un autre poste de travail différent du poste de travail, ou
(b) des données obtenues à partir d'un module de gestion d'informations et d'événements de sécurité.

15. Système selon la revendication 9, dans lequel le coordinateur d'agent (214) est configuré pour effectuer l'audit par au moins :
la configuration d'un adaptateur d'indicateur du poste de travail associé pour recevoir au moins l'indicateur de menace ;
la surveillance des informations d'état du système du poste de travail et la génération de données d'audit en réponse à un changement surveillé des informations d'état du système ; et
la fourniture de données, sur la base des données d'audit, à l'adaptateur d'indicateurs pour déterminer si le poste de travail est compromis sur la base d'une mise en correspondance des données basées sur l'audit avec l'un quelconque des indicateurs.
